# EUROPÄISCHE PATENTSCHRIFT

(11) **EP 2 927 162 B1**
(45) Veröffentlichungstag und Bekanntmachung des Hinweises auf die Patenterteilung: **25.05.2016**
(21) Anmeldenummer: 14401040.2
(22) Anmeldetag: 31.03.2014
(51) Int. Cl.: B65G 17/08, B65G 17/40

(54) **Modulglied für ein Förderband und Förderband aus gelenkig miteinander verbundenen Modulgliedern**
Module member for a conveyor belt, and conveyor belt made of module members that are flexibly connected to each other
Élément de module pour une bande de transport et bande de transport à partir d'éléments de modules reliés entre eux de manière articulée

(43) Veröffentlichungstag der Anmeldung: 07.10.2015
(73) Patentinhaber: FORBO SIEGLING GMBH, 30179 Hannover (DE)
(72) Erfinder: Broe, Peter, 8723 Losning (DK); Alpers, Patrick, 30890 Barsinghausen (DE); Schröter, Rico, 30167 Hannover (DE); Bergmann, Werner, 30161 Hannover (DE); Badenhop, Christian, 30163 Hannover (DE)
(74) Vertreter: Scheffler, Jörg

(56) Entgegenhaltungen:
- EP-A1- 1 477 434
- EP-B1- 0 175 483

## Beschreibung

Die Erfindung betrifft ein Modulglied für ein Förderband aus gelenkig miteinander verbundenen Modulgliedern, welches aus einem in einem Stück, vorzugsweise aus Kunststoff geformten Basisteil besteht. Das Basisteil hat ein erstes Ende und ein zweites Ende, die zum gelenkigen Verbinden mit anderen Modulgliedern ausgeführt sind und auf dessen Oberseite ein Befestigungsbereich ausgebildet ist. Das Modulglied besteht weiterhin aus wenigstens einem Oberflächenteil mit einem an der Nutzseite ausgebildeten Funktionsabschnitt von ausgewählter Gestalt und mit einem Halteabschnitt zur lösbaren Verbindung des Oberflächenteiles an dem Befestigungsbereich des Basisteiles. Der Befestigungsbereich ist als eine Ausnehmung in dem Basisteil ausgeführt und weist an den den beiden Enden zugewandten Seiten Leisten auf. Die Leisten sind vorzugsweise konturbündig zu einer Oberseite des Basisteiles ausgeführt. Sie greifen in die Ausnehmung ein und überdecken einen Halteabschnitt eines in der Ausnehmung angeordneten Oberflächenteiles.

Die Erfindung betrifft weiter ein Förderband aus gelenkig miteinander verbundenen Modulgliedern, die jeweils aus einem in einem Stück, vorzugsweise aus Kunststoff geformten Basisteil bestehen, wobei jedes Basisteil ein erstes Ende und ein zweites Ende hat, an denen es gelenkig mit benachbarten Modulgliedern verbunden ist.

Förderbänder aus gelenkig miteinander verbundenen Modulgliedern sind aus dem Stand der Technik in vielfältiger Weise bekannt. Sie werden in unterschiedlichsten Bereichen für den Transport von Gütern eingesetzt, wobei das Transportgut auf der von der Oberfläche der Modulglieder gebildeten Oberseite liegt.

Derartige Transportbänder werden nach Kundenwunsch gefertigt. Entsprechend den zu befördernden Gütern muss die Oberfläche des Förderbandes nach den individuellen Anforderungen unterschiedlich beschaffen sein. Bei einem Steigungsbetrieb setzt man beispielsweise Module mit einem erhöhten Reibwert der Oberfläche ein. Insbesondere bei größeren Steigungen werden Module mit Profilen als Mitnehmer eingesetzt.

Die EP 0 175 483 B1 beschreibt ein solches dem Oberbegriff des Anspruch 1 entsprechendes Modulglied für ein Förderband, das einen Befestigungsbereich für ein Oberflächenteil aufweist, wobei der Befestigungsbereich an beiden Seiten jeweils zumindest eine Nut quer zur Bandlaufrichtung aufweist. Vorsprünge der Halteabschnitte sind korrespondierend zu den Nuten ausgestaltet.

Die EP 1 477 434 A1 offenbart ein Modulglied für ein Förderband, bei dem das Basisteil an einem seiner Ränder einen als Steg ausgeführten Endanschlag aufweist, welcher die Ausnehmung quer zur Bandlaufrichtung verschließt, sodass das Einführen der Oberflächenteile nur von dem anderen Modulrand des Basisteiles möglich ist.

Die Fertigungskosten eines solchen Förderbandes werden stark von der Anzahl der vom Hersteller vorzuhaltenden unterschiedlichen Typen an Modulgliedern bestimmt. Um deren Anzahl möglichst gering zu halten, kann, wie es beispielsweise die Druckschrift EP 0 175 483 B1 zeigt, ein Modulglied geschaffen werden, welches aus einem Basisteil und unterschiedlichen an dem Basisteil einsetzbaren Oberflächenteilen besteht. So kann je nach spezifischer Anforderung mit wenigen beliebig kombinierbaren Oberflächenteilen ein individuelles Modulband geschaffen werden. Der Funktionsabschnitt der Oberflächenteile kann beispielsweise zum Separieren des Transportgutes vertikale Trennwände aufweisen, die parallel oder quer zur Transportrichtung orientiert sind. Andere Varianten haben einen Funktionsabschnitt mit Krallen oder Leitungskanälen. Auch sind Funktionsabschnitte mit strukturierter oder glatter Oberfläche bekannt.

Weiterhin sind, beispielsweise aus der Druckschrift WO 01/83338 A1, aus Modulgliedern zusammengesetzte Förderbänder bekannt, deren Modulglieder eine oder mehrere Rollkörper enthalten. Derartige Förderbänder werden eingesetzt, wenn mehrere transportierte Güter an einer Stelle akkumuliert werden sollen. Durch die Rollkörper, welche zu diesem Zweck vorzugsweise eine senkrecht zur Bandlaufrichtung orientierte Drehachse haben, kann sich das Förderband unter dem angehaltenen Transportgut weiter bewegen, während das Transportgut unabhängig von der weiteren Zirkulation des Förderbandes an Ort und Stelle verbleibt.

Wenn an einer Stelle des Förderbandes der weitere Transport einzelner oder aller Fördergüter mit einer anderen Vorrichtung oder einem Förderband erfolgen soll, so muss dieses Fördergut das Förderband verlassen. Dies geschieht häufig dadurch, dass das Fördergut in einer von der Bandlaufrichtung abweichenden Richtung bewegt wird. Diese Bewegung wird erleichtert, indem die Drehachsen der Rollkörper in dem Förderband einen Anstellwinkel zur Bandlaufrichtung aufweisen. Ein Modulglied mit der Möglichkeit, die Drehachse in einem Anstellwinkel zu montieren, ist aus der Druckschrift US 2003/0085106 A1 bekannt. Bei diesen Modulgliedern sind die einzelnen Rollkörper in Öffnungen der Modulglieder angeordnet. Für die Drehachsen der Rollkörper sind mehrere Aufnahmen vorgesehen, die eine Positionierung der Rollkörper in unterschiedlichen Winkeln erlauben. Eine ähnliche Vorrichtung ist in der Druckschrift US 7,364,038 B2 offenbart.

Neben der hohen Variabilität bei zugleich geringer Anzahl verschiedener Elemente ist eine weitere wichtige Anforderung an ein derartiges Förderband die mögliche Bandlast und beeinflusst maßgeblich den Energiebedarf beim Betrieb des Förderbandes. Die Bandlast wird im Wesentlichen von zwei Komponenten, dem Reibwert der Transportvorrichtung und der Masse des Transportgutes sowie des Förderbandes, bestimmt. Je größer diese Massen sind, desto mehr Zugkräfte muss das Förderband aufnehmen können. Dementsprechend müssen auch die einzelnen Modulglieder steifer und massiver ausgeführt sein. Die Leistungsfähigkeit eines Förderbandes bemisst sich somit auch in dem Verhältnis der Masse des Transportgutes zu der Masse des Förderbandes.

Bei dem eingangs genannten und in der Druckschrift EP 0 175 483 B1 offenbarten Modulglied ist die in dem Basisteil eingebrachte Ausnehmung für die Realisierung hoher Zugkräfte in dem Modulglied bei zugleich geringer Masse des Modulgliedes nachteilig. Die Ausnehmung verursacht eine wesentliche Verkleinerung des Querschnittes, was sich unmittelbar auf die mögliche Zugkraft auswirkt. Um bei einer hohen Zugkraft zugleich eine variable Gestaltung der Oberfläche zu ermöglichen, kann auf das in der Druckschrift US 2008/0105518 A1 beschriebene Förderband zurückgegriffen werden. Dieses Förderband besteht aus mehreren quer zur Bandlaufrichtung benachbarten Modulgliedern, zwischen denen jeweils ein Rollkörper angeordnet ist. Die Drehachse der Rollkörper wird von den beiden benachbarten Modulgliedern gehalten, welche selber einen für die Übertragung von Zugkräften ausreichend dimensionierten Übergangsbereich zwischen den Enden der Modulglieder haben.

Aus diesen Anforderungen ergibt sich nun die Aufgabe, eine zum Stand der Technik alternative Gestaltungsform eines Modulgliedes beziehungsweise eines Förderbandes zu schaffen, das eine hohe Vielfalt bei der Gestaltung bei einer geringen Anzahl an unterschiedlichen Elementen ermöglicht und zugleich bei geringem Eigengewicht eine möglichst große Zugkraft übertragen kann.

Diese Aufgabe wird gelöst mit einem Modulglied, bei dem die Nuten zur Aufnahme von Vorsprüngen der Halteabschnitte der Oberflächenteile vorgesehen sowie mit ihrer Längserstreckung quer zur Bandlaufrichtung des Förderbandes orientiert sind und die Vorsprünge der Halteabschnitte formschlüssig übergreifen. Hierdurch kann eine an den Enden des Basisteiles angreifende Zugkraft auch über die in der Ausnehmung angeordneten Oberflächenteile übertragen werden. Auf diese Weise wird der für die Übertragung der Zugkräfte relevante Materialquerschnitt des Modulgliedes und somit dessen Festigkeit bei nahezu unveränderter Masse größer. Durch die somit mögliche bessere Übertragung von Zugkräften im Förderband sind bei unverändertem oder geringerem Eigengewicht des Förderbandes größere Bandkräfte möglich. Die Leistungsfähigkeit des Förderbandes wird somit verbessert. Des Weiteren sichert der wie ein Zuganker in der Ausnehmung wirkende erfindungsgemäße Halteabschnitt die Ausnehmung gegen ein ungewolltes Aufspreizen, wie es bei hohen Zugkräften und gleichzeitiger Umlenkung des Modulgliedes im Stand der Technik bereits beobachtet wurde. Ein Aufspreizen der Ausnehmung kann bei dem bekannten Stand der Technik in extremen Fällen zum teilweisen oder gar vollständigen Herauslösen des Oberflächenteiles aus dem Basisteil führen. Durch die formschlüssige Zugverankerung des Oberflächenteiles mittels der in die Nuten eingreifenden Vorsprünge ist dies nicht mehr möglich, wodurch der Wartungs- und Reparaturbedarf des Förderbandes verringert wird.

Als günstig erwiesen hat es sich, dass die Nuten beziehungsweise Vorsprünge eines Modulgliedes eine eckige, vorzugsweise rechteckige Querschnittsform aufweisen. Hierdurch ist eine einfache Herstellung der Modulglieder möglich. Es hat sich darüber hinaus als vorteilhaft herausgestellt, dass die Nuten beziehungsweise Vorsprünge eines Modulgliedes eine abgerundete, konvexe Querschnittsform aufweisen. Diese Form erleichtert die Montage und Demontage der Oberflächenteile in der Ausnehmung der Basisteile, da hierdurch ein Verkanten vermieden wird. Schließlich hat es sich als praktisch gezeigt, dass die Nuten beziehungsweise Vorsprünge eines Modulgliedes eine keilförmige Querschnittsform aufweisen. Die Keilflächen laufen bei einer Belastung, insbesondere in Bandlaufrichtung, aufeinander und verstärken so die Haltekraft. Darüber hinaus ermöglicht eine keilförmige Querschnittsform, nicht nur bei Belastung, eine Selbstzentrierung des Oberflächenteiles.

Die Ausnehmung in einem Basisteil und die einzelnen Oberflächenteile sind so dimensioniert, dass in einem Basisteil mehrere identische oder unterschiedliche Oberflächenteile montiert sind. Dies erleichtert eine zügige Montage eines Förderbandes und erlaubt zugleich eine hochgradig individuelle Gestaltung der Oberfläche des Förderbandes. Hierdurch sind die Oberflächenteile beliebig austauschbar, was ein partielles oder vollständiges Auswechseln der Oberflächenstruktur eines Transportbandes ermöglicht.

Vorteilhaft ist es, dass die Form von Halteabschnitt und Befestigungsbereich zu einer Ebene, welche senkrecht zu der Bewegungsrichtung des Förderbandes orientiert ist, spiegelsymmetrisch gestaltet ist. Hierdurch wird die Montage der Oberflächenteile erleichtert, da diese nun in mehr als einer einzigen Orientierung in das Basisteil eingeschoben werden können.

Eine besondere Weiterbildung sieht vor, dass die Oberflächenteile eine quadratische Grundfläche mit einer umlaufenden, an die Form des Befestigungsbereiches angepassten Geometrie aufweisen. Ein solches Oberflächenteil kann in vier beliebigen Orientierungen in das Basisteil eingeschoben werden.

Bei einer anderen Ausführungsform der Erfindung ist die Form von Halteabschnitt und Befestigungsbereich zu einer Ebene, welche senkrecht zu der Bewegungsrichtung des Förderbandes orientiert ist, asymmetrisch. Hierdurch wird eine eindeutige Orientierung der Oberflächenteile bei der Montage vorgegeben. Diese Verdrehsicherung verhindert eine falsche Konfektionierung des Förderbandes.

Weiterhin ist vorgesehen, dass das Basisteil an einem seiner Ränder einen Steg aufweist, welcher die Ausnehmung quer zur Bandlaufrichtung zumindest teilweise verschließt. Durch diesen Verschluss kann das Oberflächenteil aus dem Befestigungsbereich zwar nur in einer Richtung beziehungsweise zu einem Modulrand herausgeschoben werden. Diese unidirektionale Sicherung ermöglicht es jedoch, ein Basismodul sowohl als Mittelmodul als auch als linkes und rechtes Randmodul in einem Förderband zu nutzen. Für die Verwendung als Randmodul wird das Modulglied mit dem Steg auf der Außenseite des Förderbandes positioniert. Diese erfindungsgemäße Ausgestaltung des Modulgliedes erlaubt es, ein Förderband zusammenzustellen, bei dem für die Lagesicherung der Oberflächenteile, insbesondere quer zur Bandlaufrichtung, keine zusätzlichen Anbauteile oder Befestigungsmittel erforderlich sind.

Diese Ausgestaltung des Basisteiles erlaubt die Montage des Oberflächenteiles nur über den offenen Modulrand. Jedoch ist das Oberflächenteil so ausgeführt, dass es keine bevorzugte Montageseite hat und somit auch um 180 Grad um eine zur Ebene des Förderbandes im Wesentlichen senkrechte Achse gedreht montiert werden kann. Dass das Oberflächenteil keine bevorzugte Montagerichtung hat, ist möglich, indem der Halteabschnitt des Oberflächenteiles entlang der gesamten Längserstreckung des Oberflächenteiles einheitlich und symmetrisch zu der Längserstreckung des Oberflächenteiles ausgeführt ist. Diese Ausgestaltung gestattet es, dass der Einschub des Oberflächenteiles in beiden Einbaurichtungen möglich ist.

Weiterhin als vorteilhaft hat es sich erwiesen, dass die Oberkante des Steges zu der Oberseite einen Abstand hat und der Rand des Halteabschnittes gegenüber dem Rand des Funktionsabschnittes zurückversetzt ist, sodass ein am Modulrand in dem Befestigungsbereich angeordnetes Oberflächenteil mit seinem Funktionsabschnitt den Steg übergreift. Dadurch, dass ein an dem Modulrand angeordnetes Oberflächenteil den als Steg ausgebildeten Verschluss übergreift, ist auch bei, mit Modulrand an Modulrand, nebeneinander angeordneten Mittenmodulen eine unterbrechungsfreie Oberflächenkontur der Funktionsabschnitte erreichbar. Ein Vorteil einer durchgängigen Oberfläche ist es, dass ein solches Band weniger anfällig gegenüber Verschmutzungen ist und sich ebenso leicht reinigen lässt.

Eine besondere Ausführungsform der Erfindung sieht vor, dass der Rand des Oberflächenteiles, insbesondere des Funktionsabschnittes, konturbündig mit dem Rand des Basisteiles, dem Modulrand, ausgerichtet ist.

Als günstig erwiesen hat es sich, dass in einem Oberflächenteil zumindest ein Rollkörper angeordnet ist. Durch die Ausstattung eines Oberflächenteiles mit mehreren Rollkörpern lassen sich diese schnell und einfach in den Modulgliedern montieren.

Da ein Oberflächenteil einen oder mehrere Rollkörper umfassen kann, ist es durch die Erfindung auf einfache Weise möglich, ein Förderband für individuelle Anforderungen bereitzustellen. So kann sowohl die Anzahl der Rollkörper pro Quadratmeter Förderband als auch die Ausrichtung der Rollkörper entsprechend dem spezifischen Verwendungszweck gewählt werden. Die Anzahl der Rollkörper pro Quadratmeter wird beispielsweise durch die gemeinsame Verwendung von Oberflächenteilen mit Rollkörpern und Oberflächenteilen mit ebener Oberfläche in dem Förderband realisiert.

Vorzugsweise ist ein die Drehachse des Rollkörpers ausbildender Lagerstift parallel zur Bandlaufrichtung orientiert. In dem Oberflächenteil ist der Lagerstift beiderseits des Rollkörpers in Buchsen gehalten. Dadurch, dass der Lagerstift unmittelbar nach dem Urformen des aus Kunststoff bestehenden Oberflächenteiles in die Buchsen eingesetzt wurde, sind die Buchsen auf den Lagerstift aufgeschrumpft. Der Lagerstift ist nach dem Abkühlen des Oberflächenteiles in axialer Richtung kraftschlüssig und senkrecht zur Drehachse formschlüssig in den Buchsen gehalten. Der Rollkörper ist beim Einbringen des Lagerstiftes in das Oberflächenteil auf dem Lagerstift positioniert worden. Hierdurch ist es möglich, unterschiedliche Oberflächenteile vollständig vorzufertigen. Die Oberflächenteile liegen dann bei der Konfektion des Förderbandes als Einheiten vor, die in einfacher Handhabung, gegebenenfalls automatisiert nach Kundenwunsch in die Basisteile eingesetzt werden. Diese Vereinfachung der Herstellung geht mit wesentlichen Ersparnissen bei den Kosten und der Fertigungszeit einher.

Bei der parallel zur Bandlaufrichtung orientierten Drehachse können hohe axiale Kräfte in den Lagerstift übertragen werden. Hier hat es sich als günstig erwiesen, dass bei einem im Basisteil montierten Oberflächenteil der wenigstens eine Lagerstift zumindest teilweise unterhalb der Oberseite in der Ausnehmung und/oder zumindest teilweise zwischen den an beiden Seiten des Befestigungsbereiches vorgesehenen Leisten positioniert ist. Hierdurch wird erreicht, dass die Seiten, insbesondere die Leisten des Befestigungsbereiches eine axiale Bewegung der Drehachsen durch Formschluss verhindern. Selbst wenn sich der Lagerstift aus seinen Buchsen lösen sollte, wird er sich in axialer Richtung nur bis an die Seiten beziehungsweise Leisten der Ausnehmung bewegen können. Der hierbei zur Verfügung stehende Bewegungsraum ist so gering bemessen, dass der Lagerstift nicht vollständig aus einer Buchse herausgleiten kann. Der Rollkörper ist somit bei einem Einsatz des Förderbandes immer durch Formschluss gegen Herauslösen gesichert.

Weiterhin hat es sich als praktisch erwiesen, dass das Oberflächenteil beiderseits zumindest eines Rollkörpers Kappen aufweist, welche den Lagerstift teilweise umschließend von in Bandlaufrichtung keilförmiger Geometrie sind und bei einem im Basisteil montierten Oberflächenteil oberhalb der Oberseite die Seiten des Befestigungsbereiches überkragend positioniert sind. Diese Kappen, welche vorzugsweise die Geometrie eines Abschnittes eines Kegelstumpfes aufweisen, schützen den Rollkörper und dessen Lagerung vor Stößen durch Transportgut. Das Transportgut kann an den Kappen entlang auf den Rollkörper gleiten. Die Kappen leiten die auf sie einwirkenden Kräfte in das Oberflächenteil und somit in das Modulglied.

Die Erfindung betrifft weiterhin ein Förderband aus gelenkig miteinander verbundenen Modulgliedern, die jeweils aus einem in einem Stück, vorzugsweise aus Kunststoff geformten Basisteil bestehen, wobei jedes Basisteil ein erstes Ende und ein zweites Ende hat, an denen es gelenkig mit benachbarten Modulgliedern verbunden ist. Bei diesem Förderband ist zumindest eines der Modulglieder nach wenigstens einem der vorstehend genannten Merkmale ausgeführt.

Die Erfindung lässt unterschiedliche Ausführungsformen zu. Zur weiteren Verdeutlichung ihres Grundprinzips sind einige davon in der Zeichnung dargestellt und werden nachfolgend beschrieben. Die Zeichnung zeigt in
- Fig. 1: eine schematische Darstellung einer Ansicht einer ersten Ausführungsform eines Modulgliedes bestehend aus einem Basisteil und drei Oberflächenteilen einer ersten Variante bei deren Montage an dem Basisteil;
- Fig. 2: eine schematische Darstellung einer Ansicht des in Figur 1 gezeigten Modulgliedes im zusammengesetzten Zustand;
- Fig. 3: eine schematische Darstellung einer Ansicht des in Figur 1 gezeigten Basisteiles;
- Fig. 4: eine schematische Darstellung einer Seitenansicht des offenen Modulrandes des in Figur 3 gezeigten Basisteiles;
- Fig. 5: eine schematische Darstellung einer Seitenansicht des geschlossenen Modulrandes des in Figur 3 gezeigten Basisteiles;
- Fig. 6: eine schematische Darstellung eines Schnittes einer zweiten nicht zur Erfindung gehörenden Ausführungsform eines Modulgliedes mit einem Oberflächenteil einer zweiten Variante;
- Fig. 7: eine schematische Darstellung des in Figur 6 gezeigten Oberflächenteiles;
- Fig. 8: eine schematische Darstellung des in Figur 6 gezeigten Basisteiles;
- Fig. 9: eine schematische Darstellung eines Schnittes einer dritten Ausführungsform eines Modulgliedes mit einem Oberflächenteil einer zweiten Variante;
- Fig. 10: eine schematische Darstellung des in Figur 9 gezeigten Oberflächenteiles;
- Fig. 11: eine schematische Darstellung des in Figur 9 gezeigten Basisteiles;
- Fig. 12: eine schematische Darstellung eines Schnittes einer vierten Ausführungsform eines Modulgliedes mit einem Oberflächenteil einer zweiten Variante;
- Fig. 13: eine schematische Darstellung des in Figur 12 gezeigten Oberflächenteiles;
- Fig. 14: eine schematische Darstellung des in Figur 12 gezeigten Basisteiles;
- Fig. 15: eine schematische Darstellung eines Schnittes einer fünften Ausführungsform eines Modulgliedes mit einem Oberflächenteil einer zweiten Variante;
- Fig. 16: eine schematische Darstellung des in Figur 15 gezeigten Oberflächenteiles;
- Fig. 17: eine schematische Darstellung des in Figur 15 gezeigten Basisteiles;
- Fig. 18: eine schematische Darstellung eines Schnittes einer sechsten Ausführungsform eines Modulgliedes mit einem Oberflächenteil einer zweiten Variante;
- Fig. 19: eine schematische Darstellung des in Figur 18 gezeigten Oberflächenteiles;
- Fig. 20: eine schematische Darstellung des in Figur 18 gezeigten Basisteiles;
- Fig. 21: eine schematische Darstellung eines Schnittes einer siebten Ausführungsform eines Modulgliedes mit einem Oberflächenteil einer zweiten Variante;
- Fig. 22: eine schematische Darstellung des in Figur 21 gezeigten Oberflächenteiles;
- Fig. 23: eine schematische Darstellung des in Figur 21 gezeigten Basisteiles;
- Fig. 24: eine schematische Darstellung eines geschlossenen Modulrandes in einem Längsschnitt, parallel zur Bandlaufrichtung, durch ein Modulglied;
- Fig. 25: eine schematische Darstellung eines offenen Modulrandes in einem Längsschnitt, parallel zur Bandlaufrichtung, durch ein Modulglied;
- Fig. 26: eine schematische Darstellung einer Ansicht von oben der bereits in den Figuren 1 und 2 gezeigten ersten Variante des Oberflächenteiles;
- Fig. 27: eine schematische Darstellung einer Ansicht von unten des in Figur 26 gezeigten Oberflächenteiles;
- Fig. 28: eine schematische Darstellung eines in den Figuren 26 und 27 gezeigten Rollkörpers;
- Fig. 29: eine schematische Darstellung eines Ausschnittes eines Modulgliedes mit einem im Basisteil positionierten Rollkörper;
- Fig. 30: eine schematische Darstellung einer Draufsicht eines Modulgliedes mit der in den Figuren 1 und 2 sowie 26 bis 29 gezeigten ersten Variante des Oberflächenteiles;
- Fig. 31: eine schematische Darstellung eines Längsschnittes durch ein Modulglied mit der in den Figuren 1 und 2 sowie 26 bis 30 gezeigten ersten Variante des Oberflächenteiles;
- Fig. 32: eine schematische Darstellung einer zweiten Variante des Oberflächenteiles;
- Fig. 33: eine schematische Darstellung eines Modulgliedes mit der in Figur 32 gezeigten zweiten Variante des Oberflächenteiles;
- Fig. 34: eine schematische Darstellung eines Modulgliedes mit der in Figur 32 gezeigten zweiten Variante des Oberflächenteiles bei der Montage beziehungsweise Demontage;
- Fig. 35: eine schematische Darstellung einer dritten Variante des Oberflächenteiles;
- Fig. 36: eine schematische Darstellung eines Modulgliedes mit der in Figur 32 gezeigten zweiten Variante des Oberflächenteiles;
- Fig. 37: eine schematische Darstellung eines Modulgliedes mit der in Figur 32 gezeigten zweiten Variante des Oberflächenteiles bei der Montage beziehungsweise Demontage;
- Fig. 38: eine schematische Darstellung einer vierten Variante des Oberflächenteiles;
- Fig. 39: eine schematische Darstellung eines Modulgliedes mit der in Figur 32 gezeigten vierten Variante des Oberflächenteiles;
- Fig. 40: eine schematische Darstellung eines Modulgliedes mit der in Figur 32 gezeigten vierten Variante des Oberflächenteiles bei der Montage beziehungsweise Demontage;
- Fig. 41: eine schematische Darstellung einer fünften Variante des Oberflächenteiles;
- Fig. 42: eine schematische Darstellung eines Modulgliedes mit der in Figur 32 gezeigten fünften Variante des Oberflächenteiles;
- Fig. 43: eine schematische Darstellung eines Modulgliedes mit der in Figur 32 gezeigten fünften Variante des Oberflächenteiles bei der Montage beziehungsweise Demontage;
- Fig. 44: eine schematische Darstellung eines Förderbandes mit zahlreichen Oberflächenteilen in unterschiedlichen Varianten.

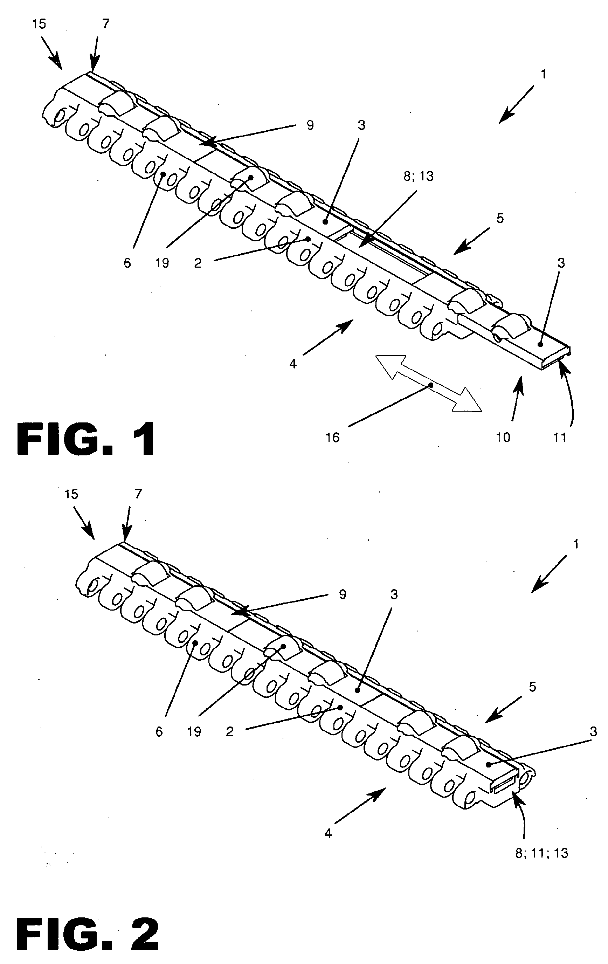

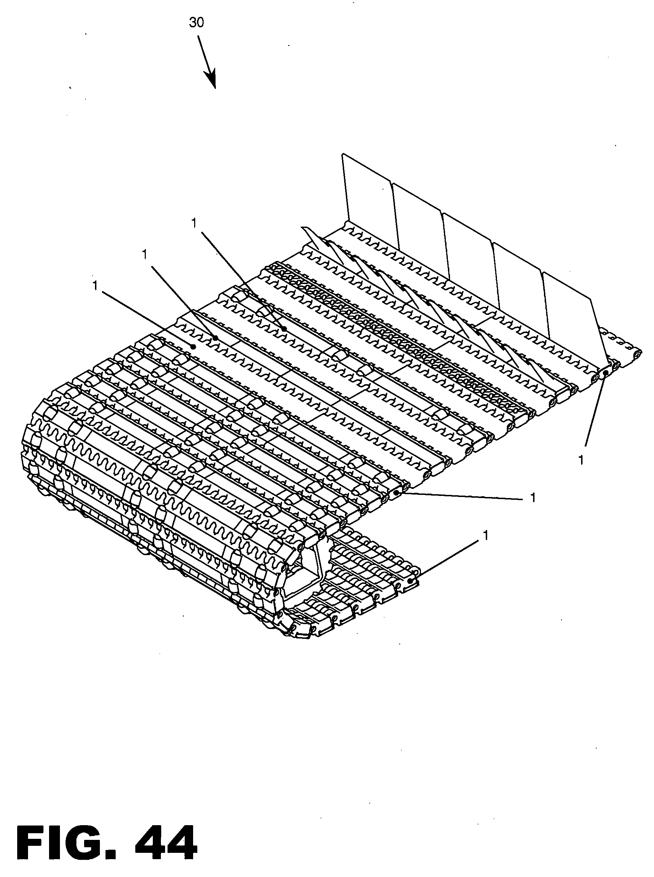

Die Figuren 1 und 2 zeigen ein Modulglied 1 für ein in Figur 44 dargestelltes Förderband 30 aus gelenkig miteinander verbundenen Modulgliedern 1. Das hier in einer ersten Ausführungsform gestaltete Modulglied 1 besteht aus einem Basisteil 2 und einem Oberflächenteil 3. Das Basisteil 2 ist vorzugsweise aus Kunststoff und in einem Stück durch Urformen hergestellt worden. Das Basisteil 2 hat ein erstes Ende 4 und ein zweites Ende 5, die zum gelenkigen Verbinden mit anderen Modulgliedern 1 mehrere Ösen 6 zur Aufnahme eines hier nicht gezeigten Kopplungsstabes aufweisen. Auf der Oberseite 7 des Basisteiles 2 ist ein Befestigungsbereich 8 zur Aufnahme eines oder mehrerer Oberflächenteile 3 ausgebildet. Figur 1 zeigt das Modulglied 1 bei der Montage eines Oberflächenteiles 3. Figur 2 zeigt das Modulglied 1 im zusammengesetzten Zustand mit Basisteil 2 und drei Oberflächenteilen 3.

Das Oberflächenteil 3 hat einen Funktionsabschnitt 9 von ausgewählter Gestalt, der in der hier gezeigten ersten Variante als eine ebene Fläche ausgestaltet ist, in der zwei Rollkörper 19 angeordnet sind. Das Oberflächenteil 3 hat weiter einen Halteabschnitt 11 zur lösbaren Verbindung des Oberflächenteiles 3 mit dem Befestigungsbereich 8 des Basisteiles 2. Die Oberflächenteile 3 sind, wie es Figur 1 veranschaulicht, als Schiebeelemente universal ausgeführt, sodass die Montage dieser in beiden Richtungen möglich ist. Die Montage und die Demontage eines Oberflächenteiles 3 ist durch einen Pfeil 16 angedeutet.

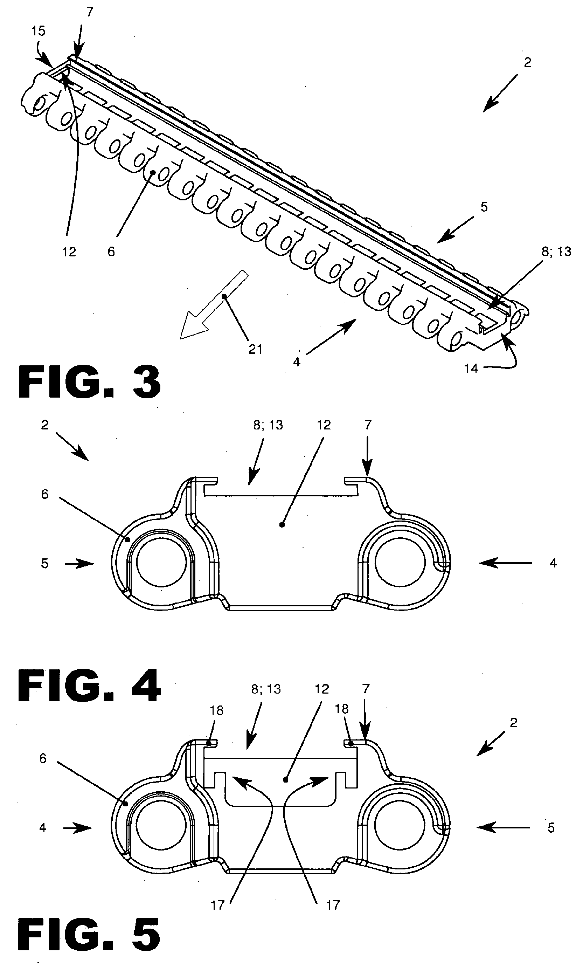

Die Figuren 3 bis 5 zeigen das Basisteil 2 des in Figur 1 dargestellten Modulgliedes 1 in unterschiedlichen Ansichten. Durch einen als Steg 12 ausgeführten Endanschlag ist das Einführen der Oberflächenteile 3 in den als eine Ausnehmung 13 in dem Basisteil 2 ausgeführten Befestigungsbereich 8 nur von einem Modulrand 14 des Basisteiles 2 möglich. Der Steg 12 an dem geschlossenen Modulrand 15 des Basisteiles 2 verschließt zumindest einen Teil der Ausnehmung 13. Der Endanschlag verhindert gleichzeitig in zumindest einer Richtung das Herausrutschen des Oberflächenteiles 3 aus dem Befestigungsbereich 8. Bei einem vollständig montierten Förderband 30 sind an beiden Außenkanten des Förderbandes 30 die geschlossenen Ränder 15 mit den Stegen 12 nach außen angeordnet. Hierdurch können bei einem fertig montierten Förderband 30 die Oberflächenteile 3 aus den einzelnen Modulgliedern 1 nicht herausrutschen. Die vorgefertigten Oberflächenteile 3 werden beim Zusammensetzen des Förderbandes 30 in die Modulglieder 1 integriert. Je nach Bedarf können in einem Modulglied 1 oder einem Förderband 30 Oberflächenteile 3 mit unterschiedlich gestaltetem Funktionsabschnitt 9 montiert sein.

Besonders gut zu erkennen sind bei diesen Abbildungen die bereits erwähnten Ösen 6, die Oberseite 7, der Befestigungsbereich 8, der Steg 12 und die Ausnehmung 13. Der Befestigungsbereich 8 hat zwei Seiten 17, von denen jede einem der beiden Enden 4, 5 zugeordnet ist. Weiterhin umfasst der Befestigungsbereich 8 Leisten 18, die an den beiden Seiten 17 ausgebildet sind. Die Leisten 18 übergreifen die Ausnehmung 13 teilweise und bilden so eine Hinterschneidung für einen in der Ausnehmung 13 angeordneten Halteabschnitt 11 eines Oberflächenteiles 3. Der Halteabschnitt 11 und somit das Oberflächenteil 3 werden von den Leisten 18 des Befestigungsbereiches 8 formschlüssig in diesem gehalten. Halteabschnitt 11 und Leisten 18 wirken somit als eine Verliersicherung des Oberflächenteiles 3 in dem Basisteil 2. Diese Verliersicherung wirkt senkrecht zur Bandlaufrichtung 21 und senkrecht zur Montage- beziehungsweise Demontagerichtung 16 des Oberflächenteiles 3. Die Leisten 18 sind in dieser Ausführungsform konturbündig zu einer Oberseite 7 des Basisteiles 2 ausgebildet, was für die Funktion der Verliersicherung nicht erforderlich ist.

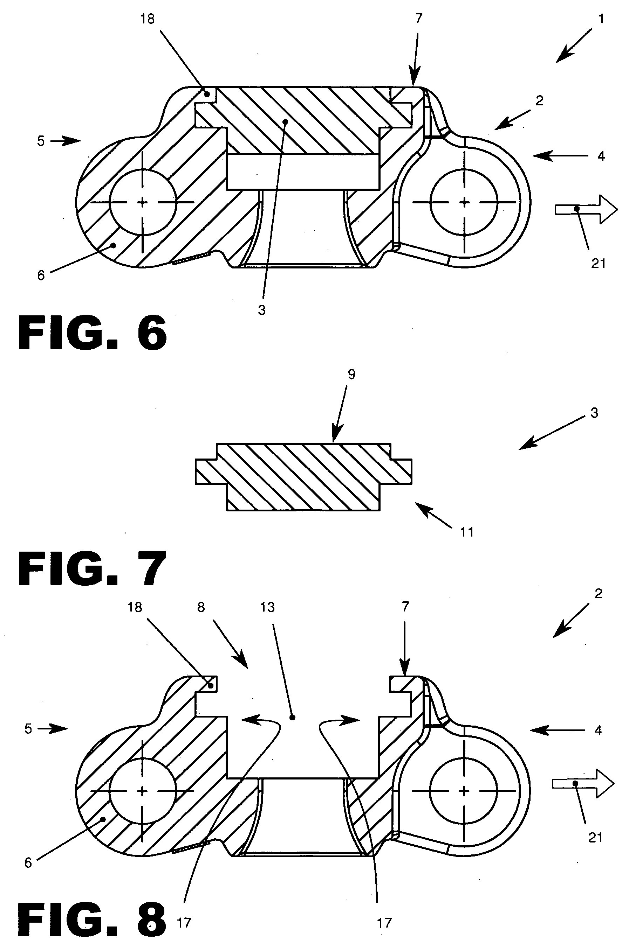

Die Figuren 6 bis 23 zeigen unterschiedliche Ausführungsformen von Modulgliedern 1, wobei hier der Schwerpunkt auf der Ausgestaltung der formschlüssigen Verbindung von Basisteil 2 und Oberflächenteil 3 liegt. Für eine bessere Vergleichbarkeit sind die Ausführungsformen zwei bis sieben mit einem Oberflächenteil 3 dargestellt, dessen Funktionsabschnitt 9 in einer einheitlichen zweiten Variante gestaltet ist. Bei dieser zweiten Variante des Oberflächenteiles 3 ist der Funktionsabschnitt 9 eben und hat keinerlei Strukturierung. Vorzugsweise ist er konturbündig mit der Oberseite 7 des Basisteiles 2 ausgeführt. Weitere Varianten des Oberflächenteiles 3 sind in den nachfolgenden Figuren gezeigt. Erfindungsgemäß ist es möglich, jede der Varianten beliebig mit einer der Ausführungsformen zu kombinieren. Innerhalb eines Modulgliedes 1 müssen Basisteil 2 und die darin angeordneten Oberflächenteile 3 zwar eine einheitliche Ausführungsform aufweisen, jedoch können die Oberflächenteile 3 eines Modulgliedes 1 unterschiedliche Varianten bei der Gestaltung des Funktionsabschnittes 9 haben.

Die Figuren 6 bis 8 zeigen eine zweite Ausführungsform eines Modulgliedes 1. Diese Ausführungsform ist eine Grundform der Ausgestaltung einer Verliersicherung zwischen Oberflächenteil 3 und Basisteil 2. Diese Ausführungsform ist auch vereinzelt im Stand der Technik bekannt.

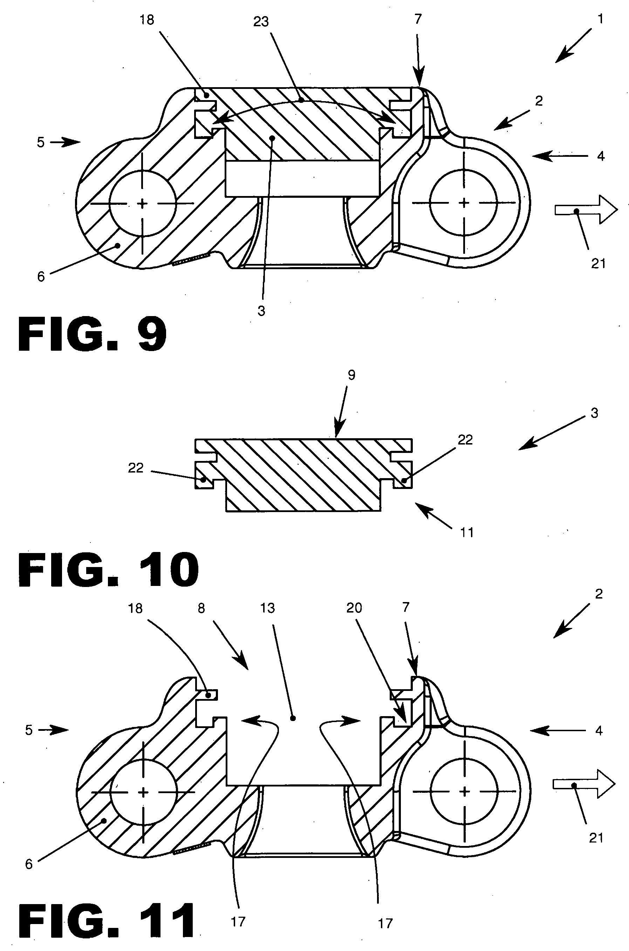

Die Figuren 9 bis 23 zeigen Ausführungsformen, bei denen das Basisteil 2 in seinem Befestigungsbereich 8 an jeder der beiden Seiten 17 jeweils eine Nut 20 hat. Die Nuten 20 sind mit ihrer Längsersteckung senkrecht zur Bandlaufrichtung 21 des Förderbandes 30 beziehungsweise parallel zur Montage- beziehungsweise Demontagerichtung 16 des Oberflächenteiles 3 orientiert. Die zu diesen Ausführungsformen gehörigen Oberflächenteile 3 haben im Bereich ihrer Halteabschnitte 11 Vorsprünge 22. Die Vorsprünge 22 sind korrespondierend zu den Nuten 20 ausgeführt, sodass bei einem am Basisteil 2 angeordneten Oberflächenteil 3 die Vorsprünge 22 in die Nuten 20 aufgenommen sind. Der so erreichte, parallel zur Bandlaufrichtung 21 wirksame Formschluss von Nuten 20 und Vorsprüngen 22 ermöglicht eine Übertragung von Zugkräften 23 durch das Oberflächenteil 3, wodurch eine höhere Bandkraft in dem Förderband 30 möglich ist.

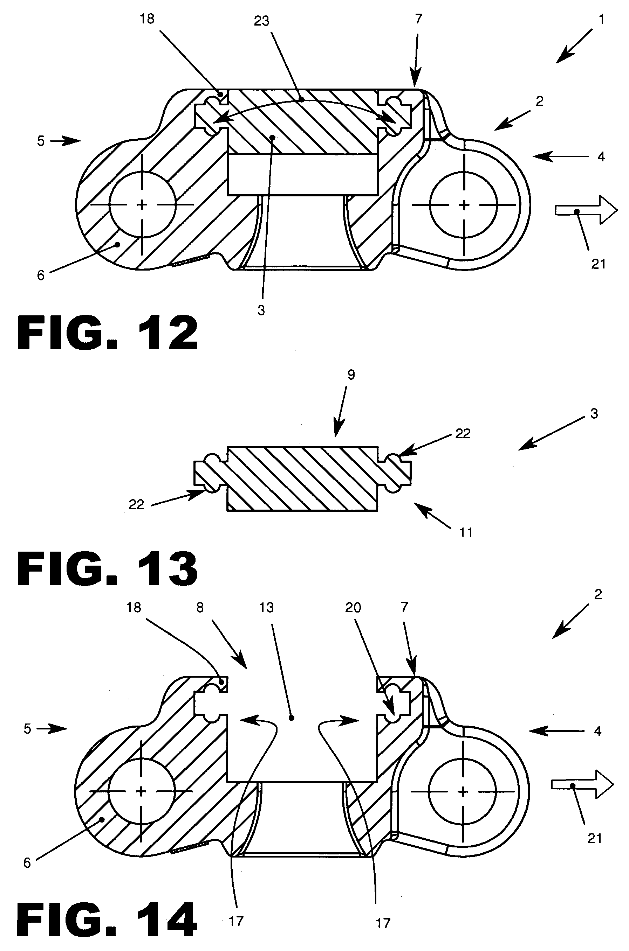

Die Figuren 9 bis 11 zeigen eine dritte Ausführungsform eines Modulgliedes 1. Bei dieser Ausführungsform sind die Nuten 20 von der Oberseite 7 weg orientiert. Weiterhin sind die Leisten 18 versetzt zu der Oberseite 7 des Basisteiles 2 in der Ausnehmung 13 positioniert. Die Figuren 12 bis 14 zeigen eine vierte Ausführungsform eines Modulgliedes 1. Bei dieser Ausführungsform sind auf jeder Seite 17 zwei Nuten 20 beziehungsweise zwei Vorsprünge 22 vorgesehen. Von den Nuten 20 sind zwei von der Oberseite 7 weg und die anderen zur Oberseite 7 hin orientiert. Letztere sind in den Leisten 18 ausgebildet.

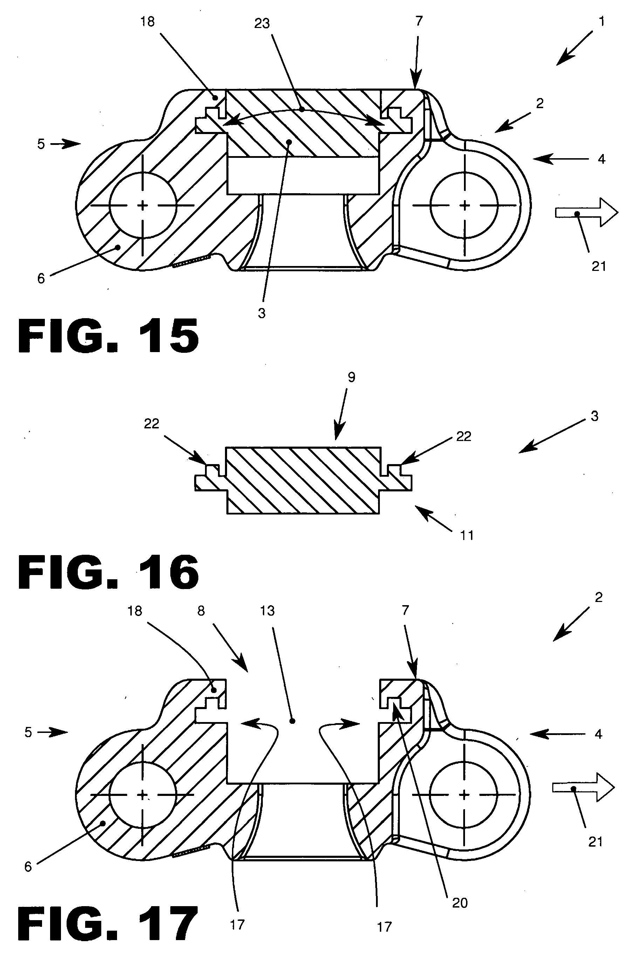

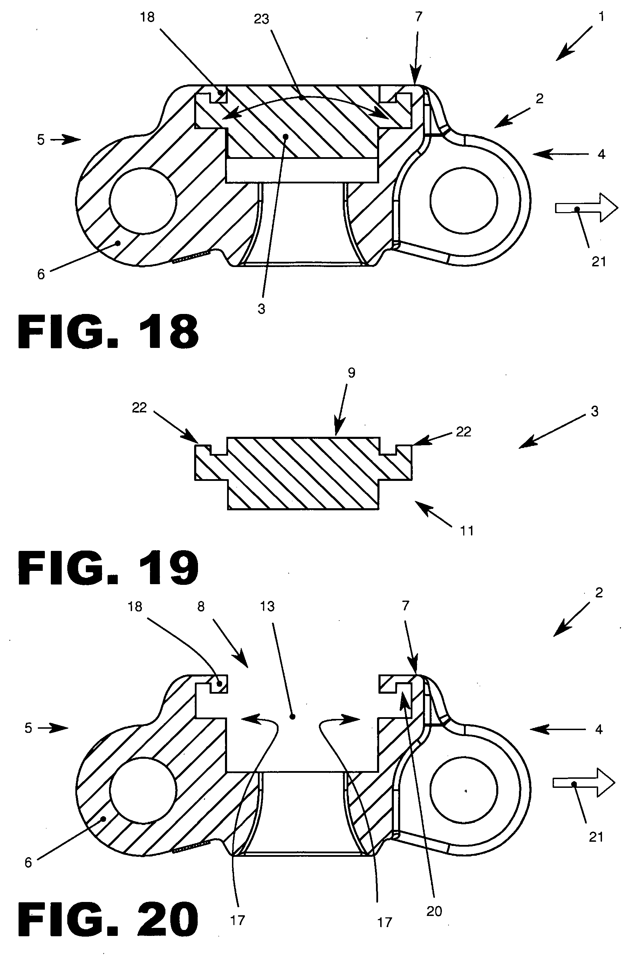

Die Figuren 15 bis 17 zeigen eine fünfte Ausführungsform und die Figuren 18 bis 20 zeigen eine sechste Ausführungsform eines Modulgliedes 1. Bei diesen Ausführungsformen ist auf jeder Seite 17 eine Nut 20 beziehungsweise ein Vorsprung 22 vorgesehen. Diese sind zur Oberseite 7 hin orientiert.

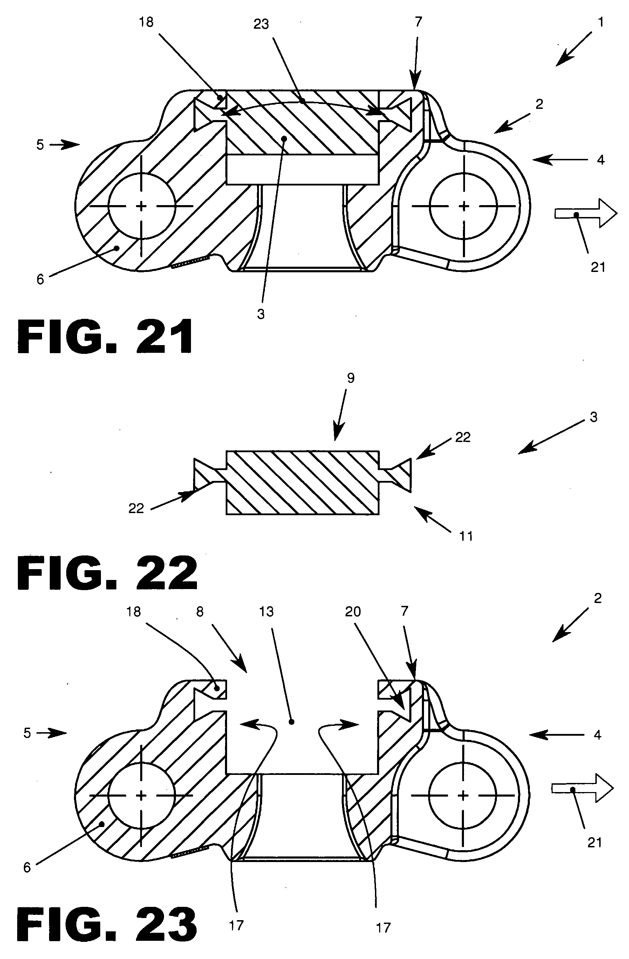

Die Figuren 21 bis 23 zeigen eine siebte Ausführungsform eines Modulgliedes 1. Bei dieser Ausführungsform sind auf jeder Seite 17 zwei Nuten 20 beziehungsweise zwei Vorsprünge 22 vorgesehen, welche trapezförmig ausgebildet sind, wobei die Basis der Trapezform vorzugsweise weiter außen positioniert ist. Hierdurch wirken die Vorsprünge 22 in den Nuten 20 bei einer zu übertragenden Zugkraft 23 dieser wie Keile entgegen.

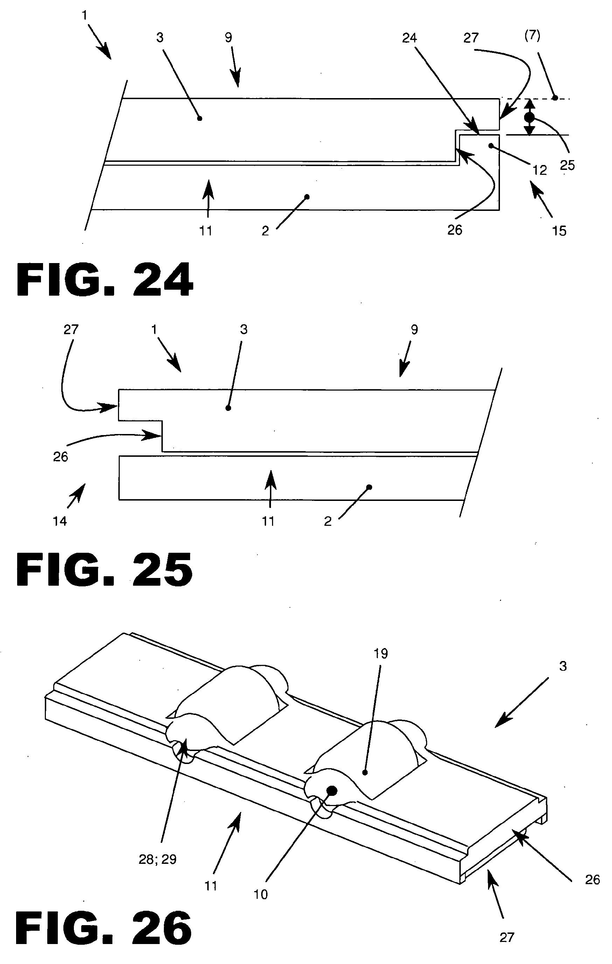

Die Figuren 24 bis 25 zeigen jeweils einen schematischen Längsschnitt durch einen Teil eines Modulgliedes 1. Dabei zeigt die Figur 24 den geschlossenen Modulrand 15 und Figur 25 den offenen Modulrand 14 dieses Modulgliedes 1. Über den offenen Modulrand 14 werden die Oberflächenteile 3 an dem Basisteil 2 montiert beziehungsweise demontiert. Eine Bewegung der Oberflächenteile 3 über den geschlossenen Modulrand 15 ist nicht möglich. Am geschlossenen Modulrand 15 ist ein Steg 12 ausgebildet. Dieser wirkt als Anschlag für ein in der Ausnehmung 13 des Basisteiles 2 angeordnetes Oberflächenteil 3. Vorzugsweise hat eine Oberkante 24 des Steges 12 zu der Oberseite 7 des Basisteiles 2 einen Abstand 25. Bei dem Oberflächenteil 3 ist ein Rand 26 des Halteabschnittes 11 gegenüber einem Rand 27 des Funktionsabschnittes 9 zurückversetzt, sodass ein am geschlossenen Modulrand 15 angeordnetes Oberflächenteil 3 mit seinem Funktionsabschnitt 9 den Steg 12 übergreift. Vorzugsweise ist der Rand 27 des Funktionsabschnittes 9 dann konturbündig zu dem Modulrand 15 des Basisteiles 2 positioniert. Die Größen von Basisteil 2 und den Oberflächenteilen 3 sind so aufeinander abgestimmt, dass auch bei einem am offenen Modulrand 14 angeordneten Oberflächenteil 3 der Rand 27 des Funktionsabschnittes 9 konturbündig zu dem Modulrand 14 des Basisteiles 2 positioniert ist. Bei benachbarten Modulgliedern 1 stoßen die Ränder 27 der Funktionsabschnitte 9 aneinander und es wird quer zur Bandlaufrichtung 21 eine durchgängige Oberfläche des Förderbandes 30 erreicht. Figur 26 zeigt exemplarisch ein Oberflächenteil 3.

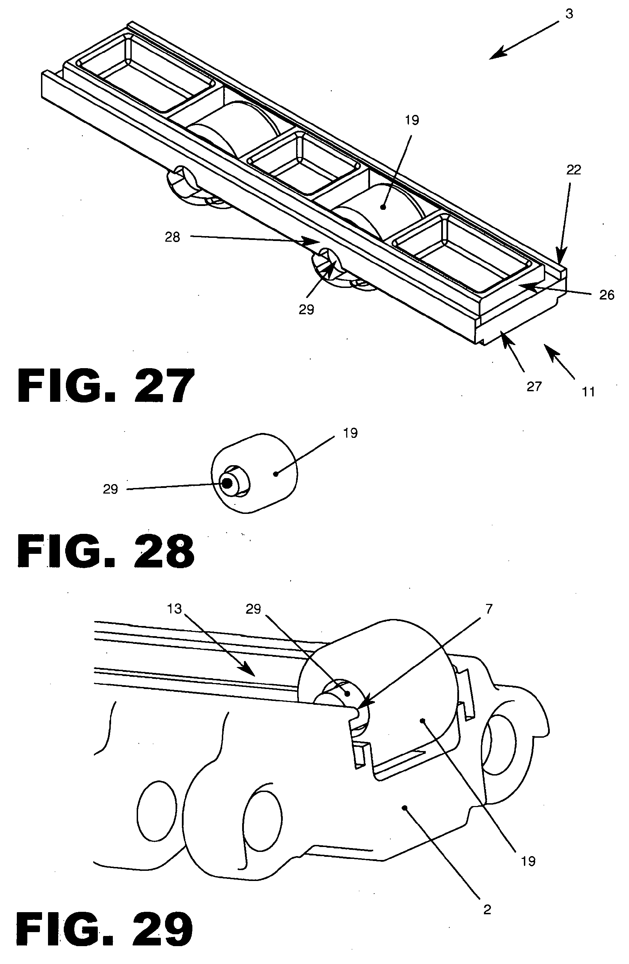

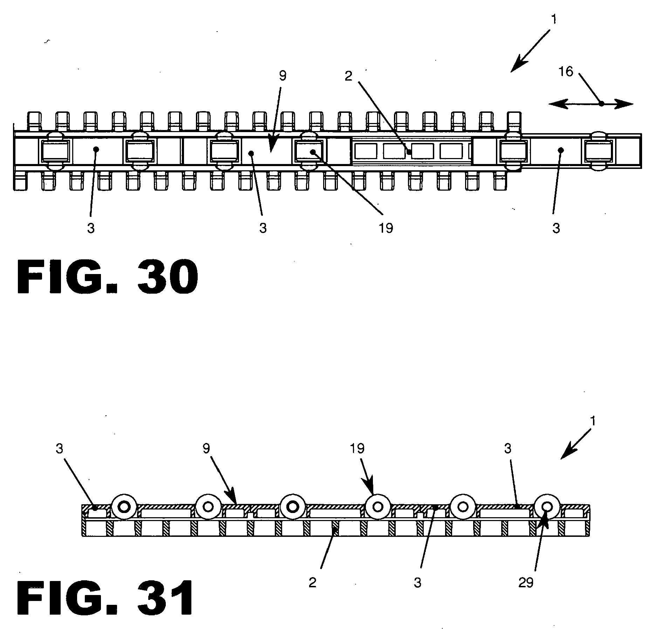

Die Figuren 26 bis 31 zeigen wie die Figuren 1 und 2 die erste Variante des Oberflächenteiles 3. Dieses Oberflächenteil 3 umfasst einen den Funktionsabschnitt 9 bestimmenden Rollkörper 19. Der Rollkörper 19 ist um eine Drehachse beweglich auf einem Lagerstift 29 angeordnet. Der Lagerstift 29 und die Drehachse sind parallel zur Bandlaufrichtung 21 orientiert. Der Lagerstift 29 ist beidseitig des Rollkörpers 19 in Buchsen 28 gehalten. Bei einem im Basisteil 2 montierten Oberflächenteil 3 sind die Lagerstifte 29 zumindest teilweise unterhalb der Oberseite 7 des Basisteiles 2 in der Ausnehmung 13 positioniert. Dies ist in Figur 29 veranschaulicht, in der ein Basisteil 2 und von dem Oberflächenteil 3 nur ein Rollkörper 19 mit Lagerstift 29 dargestellt sind. Eine axiale Bewegung der Lagerstifte 29 parallel zur Bandlaufrichtung 21 ist dabei durch den Formschluss mit dem Basisteil 2 verhindert. Das Oberflächenteil 3 weist beiderseits der Rollkörper 19 Kappen 10 auf, welche den Lagerstift 29 teilweise umschließen. Die Buchsen 28 haben die Geometrie eines Abschnittes eines Kegelstumpfes, wobei sie parallel zur Bandlaufrichtung 21 von den Enden 4, 5 des Basisteiles 2 zum Funktionsabschnitt 9 hin mit einem zunehmenden Durchmesser ansteigend ausgeführt sind. Weiterhin sind die Buchsen 28 bei einem im Basisteil 2 montierten Oberflächenteil 3 oberhalb der Oberseite 7 die Seiten 17 des Befestigungsbereiches 8 überkragend positioniert.

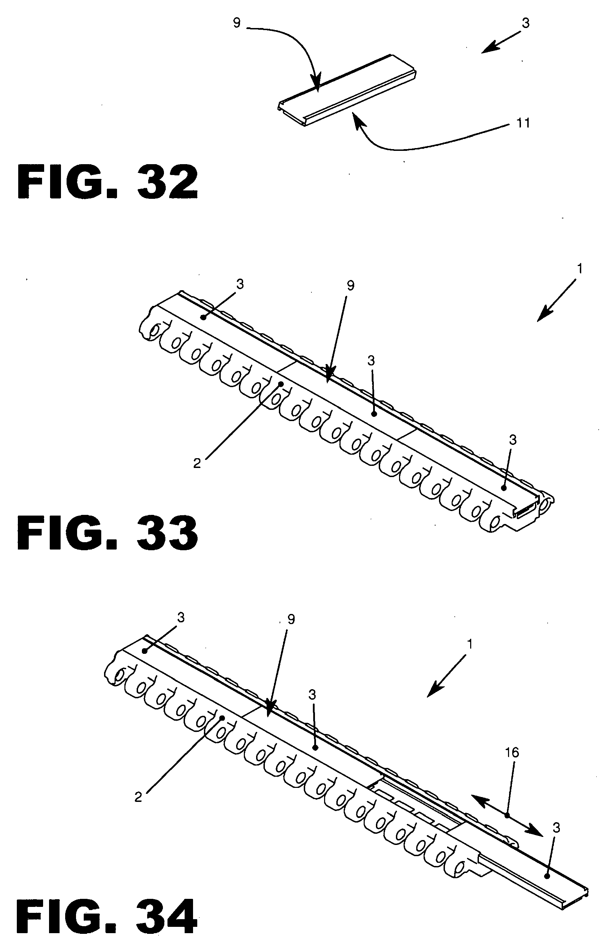

Die Figuren 32 bis 44 zeigen weitere Varianten der Gestaltung des Funktionsabschnittes 9 des Oberflächenteiles 3. Dabei wird zu jeder Variante in einer Figur das Oberflächenteil 3 alleine, in einer weiteren Figur ein Modulglied 1 mit drei im Basisteil 2 angeordneten Oberflächenteilen 3 und in einer dritten Figur die Montage beziehungsweise Demontage eines Oberflächenteiles 3 dargestellt.

Die Figuren 32 bis 34 zeigen eine zweite Variante des Oberflächenteiles 3. Wie auch in den Figuren 6 bis 9 ist bei diesem Oberflächenteil 3 der Funktionsabschnitt 9 eben und ohne Strukturierungen ausgeführt.

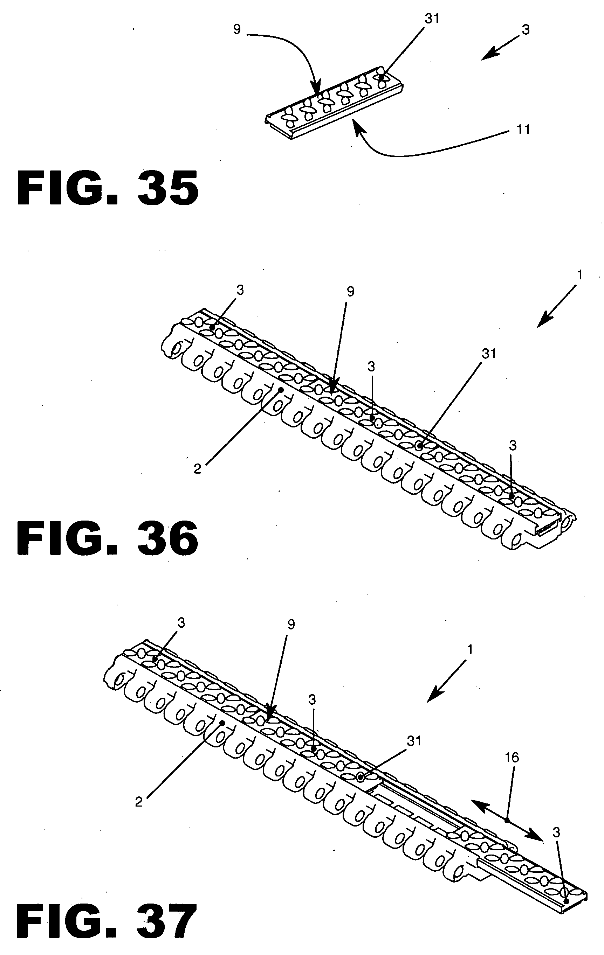

Die Figuren 35 bis 37 zeigen eine dritte Variante des Oberflächenteiles 3. Der Funktionsabschnitt 9 umfasst mehrere abgerundete Erhebungen 31, welche in einem regelmäßigen Muster über den Funktionsabschnitt 9 verteilt sind.

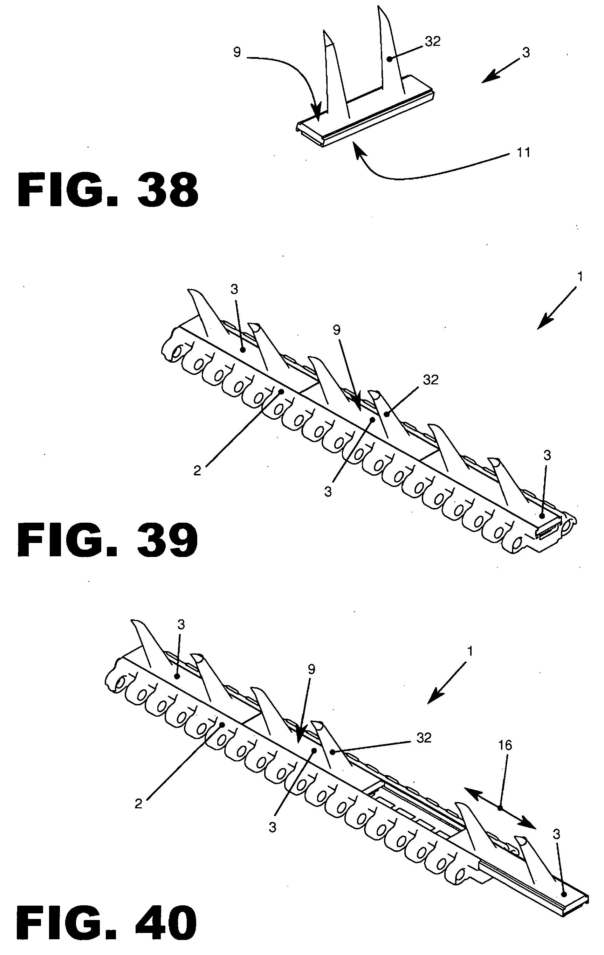

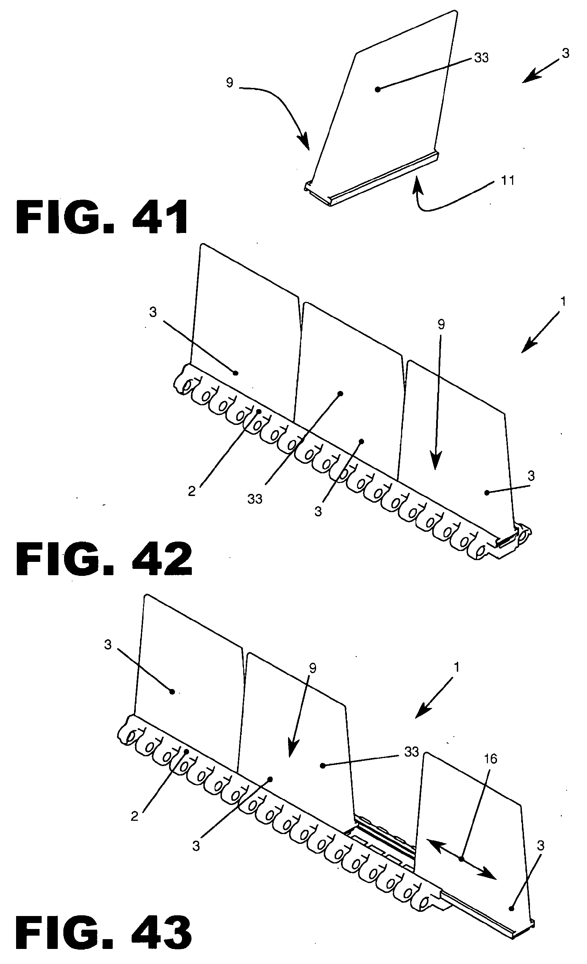

Die Figuren 38 bis 40 zeigen eine vierte Variante des Oberflächenteiles 3. Der Funktionsabschnitt 9 umfasst mehrere weit auskragende und spitz zulaufende Haken 32. Die Figuren 41 bis 43 zeigen eine fünfte Variante des Oberflächenteiles 3. Der Funktionsabschnitt 9 des Oberflächenteiles 3 ist als eine senkrecht zur Bandlaufrichtung 21 orientierte Scheibe 33 ausgeführt.

Figur 44 zeigt ein Förderband 30 mit zahlreichen, in unterschiedlichen Varianten ausgeführten Oberflächenteilen 3. Die dargestellten Varianten der Funktionsbereiche 9 der Oberflächenteile 3 sind jeweils in den vorstehenden Figuren erläutert.

## Patentansprüche

1. Modulglied (1) für ein Förderband (30) aus gelenkig miteinander verbundenen Modulgliedern (1), welches aus einem in einem Stück, vorzugsweise aus Kunststoff geformten Basisteil (2) und aus wenigstens einem Oberflächenteil (3) besteht,
wobei das Basisteil (2) ein erstes Ende (4) und ein zweites Ende (5) hat, die zum gelenkigen Verbinden mit anderen Modulgliedern (1) ausgeführt sind, und dessen Oberseite (7) ein Befestigungsbereich (8) zugeordnet ist,
wobei das Oberflächenteil (3) einen Funktionsabschnitt (9) von ausgewählter Gestalt und einen Halteabschnitt (11) zur lösbaren Verbindung des Oberflächenteiles (3) an dem Befestigungsbereich (8) des Basisteiles (2) umfasst,
wobei der Befestigungsbereich (8) als eine Ausnehmung (13) in dem Basisteil (2) mit den zwei den beiden Enden (4, 5) zugeordneten Seiten (17) ausgeführt ist und
der Befestigungsbereich (8) an den Seiten (17) Leisten (18) aufweist, welche in die Ausnehmung (13) hineinragen und den darin angeordneten Halteabschnitt (11) übergreifen, wobei das Oberflächenteil (3) gegen eine Bewegung senkrecht zu einer Ebene des Förderbandes (30) formschlüssig in dem Basisteil (2) gehalten ist, und
der Befestigungsbereich (8) an beiden Seiten (17) jeweils zumindest eine Nut (20) aufweist, wobei die Längserstreckung der Nuten (20) quer zur Bandlaufrichtung (21) orientiert ist und der Halteabschnitt (11) Vorsprünge (22) aufweist, welche korrespondierend zu den Nuten (20) ausgestaltet sind, **dadurch gekennzeichnet, dass** die Nuten (20) die Vorsprünge (22) der Halteabschnitte (11) mit parallel zur Bandlaufrichtung (21) wirksamem Formschluss übergreifen.

2. Modulglied (1) nach Anspruch 1, **dadurch gekennzeichnet, dass** die Oberkante (24) des Steges (12) zu der Oberseite (7) einen Abstand (25) hat und der Rand (26) des Halteabschnittes (11) gegenüber dem Rand (27) des Funktionsabschnittes (9) zurückgesetzt ist, sodass ein am Modulrand (15) des Basisteiles (2) in dem Befestigungsbereich (8) angeordnetes Oberflächenteil (3) mit seinem Funktionsabschnitt (9) den Steg (12) übergreift.

3. Modulglied (1) nach den Ansprüchen 1 oder 2, **dadurch gekennzeichnet, dass** in einem Oberflächenteil (3) ein Rollkörper (19) angeordnet ist, dessen Lagerstift (29) parallel zur Bandlaufrichtung (21) orientiert ist.

4. Modulglied (1) nach Anspruch 3, **dadurch gekennzeichnet, dass** der Lagerstift (29) beiderseits des Rollkörpers (19) in Buchsen (28) des Oberflächenteiles (3) durch Aufschrumpfen des Oberflächenteiles (3) auf dem Lagerstift (29) gehalten ist.

5. Modulglied (1) nach Anspruch 3, **dadurch gekennzeichnet, dass** bei einem im Basisteil (2) montierten Oberflächenteil (3) zumindest ein Lagerstift (29) zumindest teilweise unterhalb der Oberseite (7) in der Ausnehmung (13) positioniert ist.

6. Modulglied (1) nach Anspruch 3, dadurch gekerinzeichnet, dass bei einem im Basisteil (2) montierten Oberflächenteil (3) der wenigstens eine Lagerstift (29) zumindest teilweise zwischen den an beiden Seiten (17) des Befestigungsbereiches (8) vorgesehenen Leisten (18) positioniert ist.

7. Modulglied (1) nach Anspruch 3, **dadurch gekennzeichnet, dass** das Oberflächenteil (3) beiderseits zumindest eines Rollkörpers (19) Kappen (10) aufweist, welche den Lagerstift (29) teilweise umschließend von in Bandlaufrichtung (21) keilförmiger Geometrie sind und bei einem im Basisteil (2) montierten Oberflächenteil (3) oberhalb der Oberseite (7) die Seiten (17) des Befestigungsbereiches (8) überkragend positioniert sind.

8. Modulglied (1) nach zumindest einem der vorhergehenden Ansprüche, **dadurch gekennzeichnet, dass** in einem Basisteil (2) mehrere identische oder unterschiedliche Oberflächenteile (3) montiert sind.

9. Modulglied (1) nach zumindest einem der vorhergehenden Ansprüche, **dadurch gekennzeichnet, dass** die Nuten (20) beziehungsweise Vorsprünge (22) mit eckiger und/oder abgerundeter, konvexer und/oder keilförmiger Querschnittsform ausgeführt sind.

10. Modulglied (1) nach zumindest einem der vorhergehenden Ansprüche, **dadurch gekennzeichnet, dass** der Halteabschnitt (11) des Oberflächenteiles (3) entlang der gesamten Längserstreckung des Oberflächenteiles (3) einheitlich und symmetrisch zu der Längserstreckung des Oberflächenteiles (3) ausgeführt ist.

11. Modulglied (1) nach zumindest einem der vorhergehenden Ansprüche, **dadurch gekennzeichnet, dass** das Basisteil (2) an einem seiner Ränder (14, 15) einen Steg (12) aufweist, welcher die Ausnehmung (13) quer zur Bandlaufrichtung (21) zumindest teilweise verschließt.

12. Förderband (30) aus gelenkig miteinander verbundenen Modulgliedern (1), die jeweils aus einem in einem Stück, vorzugsweise aus Kunststoff geformten Basisteil (2) bestehen, wobei jedes Basisteil (2) ein erstes Ende (4) und ein zweites Ende (5) hat, an denen es gelenkig mit benachbarten Modulgliedern (1) verbunden ist, **dadurch gekennzeichnet, dass** zumindest eines der Modulglieder (1) nach den Merkmalen zumindest eines der vorstehend genannten Ansprüche ausgeführt ist.

## Claims

1. Module link (1) for a conveyor belt (30) of module links (1) which are interconnected in an articulated manner, which is composed of an integrally moulded base part (2), preferably of plastics, and of at least one surface part (3), wherein the base part (2) has a first end (4) and a second end (5) which are embodied for connection in an articulated manner to other module links (1), and the upper side (7) of said base part (2) is assigned a fastening region (8), wherein the surface part (3) comprises a functional portion (9) of a selected shape and a retaining portion (11) for releasably connecting the surface part (3) to the fastening region (8) of the base part (2), wherein the fastening region (8) is embodied as a clearance (13) in the base part (2), having the two sides (17) assigned to the two ends (4, 5), and the fastening region (8) on the sides (17) has strips (18) which protrude into the clearance (13) and engage across the retaining portion (11) disposed in the latter, wherein the surface part (3) in relation to movement which is perpendicular to a plane of the conveyor belt (30) is held in a form-fitting manner in the base part (2), and the fastening region (8) on both sides (17) has in each case at least one groove (20), wherein the longitudinal extent of the grooves (20) is oriented in a transverse manner to the belt running direction (21) and the retaining portion (11) has projections (22) which are designed so as to correspond to the grooves (20), **characterized in that** the grooves (20) by way of a form-fit which is effective so as to be parallel with the belt running direction (21) engage across the projections (22) of the retaining portions (11).

2. Module link (1) according to Claim 1, **characterized in that** the upper edge (24) of the web (12) is spaced apart (25) from the upper side (7), and the periphery (26) of the retaining portion (11) is recessed in relation to the periphery (27) of the functional portion (9), such that a surface part (3), which is disposed on the module periphery (15) of the base part (2) in the fastening region (8), by way of the functional portion (9) thereof engages across the web (12).

3. Module link (1) according to Claim 1 or 2, **characterized in that** a rolling element (19), the mounting pin (29) of which being oriented so as to be parallel with the belt running direction (21), is disposed in a surface part (3).

4. Module link (1) according to Claim 3, **characterized in that** the mounting pin (29) by shrink-fitting the surface part (3) to the mounting pin (29) is held on both sides of the rolling element (19) in bushes (28) of the surface part (3).

5. Module link (1) according to Claim 3, **characterized in that** in a surface part (3) which is assembled in the base part (2) at least one mounting pin (29) is at least partially positioned below the upper side (7) in the clearance (13).

6. Module link (1) according to Claim 3, **characterized in that** in a surface part (3) which is assembled in the base part (2) the at least one mounting pin (29) is at least partially positioned between the strips (18) which are provided on both sides (17) of the fastening region (8).

7. Module link (1) according to Claim 3, **characterized in that** the surface part (3) on both sides of at least one rolling element (19) has caps (10) which, while partially enclosing the mounting pin (29), are of a geometry which is cuneiform in the belt running direction (21) and in a surface part (3) which is assembled in the base part (2) are positioned so as to protrude over the sides (17) of the fastening region (8) above the upper side (7).

8. Module link (1) according to at least one of the preceding claims, **characterized in that** a plurality of identical or dissimilar surface parts (3) are assembled in a base part (2).

9. Module link (1) according to at least one of the preceding claims, **characterized in that** the grooves (20) or the projections (22), respectively, are embodied having an angular and/or rounded, convex and/or cuneiform cross-sectional shape.

10. Module link (1) according to at least one of the preceding claims, **characterized in that** the retaining portion (11) of the surface part (3) along the entire longitudinal extent of the surface part (3) is embodied in a uniform manner and so as to be symmetrical in relation to the longitudinal extent of the surface part (3).

11. Module link (1) according to at least one of the preceding claims, **characterized in that** the base part (2) on one of the peripheries (14, 15) thereof has a web (12) which at least partially closes the clearance (13) in a manner transverse to the belt running direction (21).

12. Conveyor belt (30) of module links (1) which are interconnected in an articulated manner and which are in each case composed of an integrally moulded base part (2), preferably of plastics, wherein each base part (2) has a first end (4) and a second end (5) by way of which said base part (2) is connected in an articulated manner to adjacent module links (1), **characterized in that** at least one of the module links (1) is embodied according to the features of at least one of the preceding claims.

## Revendications

1. Elément de module (1) pour un tapis de transport (30) composé d'éléments de module (1) reliés entre eux de manière articulée, ledit élément de module étant composé d'une partie de base (2) formée en une pièce, de préférence en matière plastique et d'au moins une partie superficielle (3) ;
la partie de base (2) ayant une première extrémité (4) et une deuxième extrémité (5) réalisées pour s'articuler aux autres éléments de module (1) et dont une zone de fixation (8) est associée au côté supérieur (7) ;
la partie superficielle (3) comprenant une section fonctionnelle (9) de forme choisie et une section de maintien (11) pour relier de façon amovible la partie superficielle (3) à la zone de fixation (8) de la partie de base (2) ;
la zone de fixation (8) étant réalisée sous la forme d'un évidement (13) dans la partie de base (2) avec les deux côtés (17) associés aux deux extrémités (4, 5); et
la zone de fixation (8) comportant des baguettes (18) au niveau des côtés (17), lesdites baguettes rentrant dans l'évidement (13) et agrippant la section de maintien (11) disposée à l'intérieur, la partie superficielle (3) étant maintenue par complémentarité de formes dans la partie de base (2) à l'encontre d'un mouvement perpendiculaire à un plan du tapis de transport (30) ; et
la zone de fixation (8) comportant au niveau des deux côtés (17) respectivement au moins une rainure (20), l'extension longitudinale des rainures (20) étant orientée transversalement à la direction d'avancée du tapis (21) et la section de maintien (11) comportant des saillies (22) configurées de façon correspondante aux rainures (20) ;
**caractérisé en ce que** les rainures (20) saisissent les saillies (22) des sections de maintien (11) par complémentarité de formes active parallèlement à la direction d'avancée du tapis (21).

2. Elément de module (1) selon la revendication 1, **caractérisé en ce que** l'arête supérieure (24) de l'étai (12) a une certaine distance (25) par rapport au côté supérieur (7) et que le bord (26) de la section de maintien (11) est reculé par rapport au bord (27) de la section fonctionnelle (9), de sorte qu'une partie superficielle (3) disposée au niveau du bord de module (15) de la partie de base (2) agrippe l'étai (12) avec sa section fonctionnelle (9), dans la zone de fixation (8).

3. Elément de module (1) selon les revendications 1 ou 2, **caractérisé en ce qu'**un corps roulant (19) est disposé dans une partie superficielle (3), la tige de palier (29) dudit corps étant orientée parallèlement à la direction d'avancée du tapis (21).

4. Elément de module (1) selon la revendication 3, **caractérisé en ce que** la tige de palier (29) est maintenue des deux côtés du corps roulant (19) dans des douilles (28) de la partie superficielle (3) par emmanchement à chaud de la partie superficielle (3) sur la tige de palier (29).

5. Elément de module (1) selon la revendication 3, **caractérisé en ce qu'**en présence d'une partie superficielle (3) montée dans la partie de base (2), au moins une tige de palier (29) est positionnée dans l'évidement (13) au moins en partie en dessous du côté supérieur (7).

6. Elément de module (1) selon la revendication 3, **caractérisé en ce qu'**en cas de partie superficielle (3) montée dans la partie de base (2), l'au moins une tige de palier (29) est positionnée au moins en partie entre les baguettes (18) prévues au niveau des deux côtés (17) des zones de fixation (8).

7. Elément de module (1) selon la revendication 3, **caractérisé en ce que** la partie superficielle (3) comporte des bouchons (10) des deux côtés au moins d'un corps roulant (19), lesdits bouchons ayant une forme géométrique en forme de clavette dans la direction d'avancée du tapis (21) et ceignant en partie la tige de palier (29) et les côtés (17) de la zone de fixation (8) étant positionnés en collerette au-dessus du côté supérieur (7) en présence d'une partie superficielle (3) montée dans la partie de base (2).

8. Elément de module (1) selon au moins l'une quelconque des revendications précédentes, **caractérisé en ce que** plusieurs parties superficielles (3) identiques ou différentes sont montées dans une partie de base (2).

9. Elément de module (1) selon au moins l'une quelconque des revendications précédentes, **caractérisé en ce que** les rainures (20) et/ou les saillies (22) sont réalisées avec une forme de section transversale anguleuse et/ou arrondie, convexe et/ou en forme de clavette.

10. Elément de module (1) selon au moins l'une quelconque des revendications précédentes, **caractérisé en ce que** la section de maintien (11) de la partie superficielle (3) est réalisée de façon homogène le long de la totalité de l'extension longitudinale de la partie superficielle (3) et symétriquement à l'extension longitudinale de la partie superficielle (3).

11. Elément de module (1) selon au moins l'une quelconque des revendications précédentes, **caractérisé en ce que** la partie de base (2) comporte au niveau de ses bords (14, 15) un étai (12) fermant au moins en partie l'évidement (13) transversalement à la direction d'avancée du tapis (21).

12. Tapis de transport (30) composé d'éléments de module (1) reliés entre eux de manière articulée et composés respectivement d'une partie de base (2) formée en une pièce, de préférence en matière plastique, chaque partie de base (2) ayant une première extrémité (4) et une deuxième extrémité (5) au niveau desquelles l'élément de module est relié de façon articulée aux éléments de module (1) connexes, **caractérisé en ce qu'**au moins un des éléments de module (1) est réalisé selon les caractéristiques d'au moins une des revendications précédemment mentionnées.
